# EUROPÄISCHE PATENTSCHRIFT

(11) **EP 2 864 108 B1**
(45) Veröffentlichungstag und Bekanntmachung des Hinweises auf die Patenterteilung: **01.01.2020**
(21) Anmeldenummer: 13734016.2
(22) Anmeldetag: 27.06.2013
(51) Int. Cl.: B29C 64/153, B22F 3/105, B29C 35/08, B29C 64/393, B33Y 10/00, B33Y 30/00, B33Y 50/02, B29K 71/00, B29K 77/00

(54) **VORRICHTUNG UND VERFAHREN ZUM SCHICHTWEISEN HERSTELLEN EINES DREIDIMENSIONALEN OBJEKTS**
DEVICE AND METHOD FOR LAYER-BY-LAYER PRODUCTION OF A THREE-DIMENSIONAL OBJECT
DISPOSITIF ET PROCÉDÉ DE FABRICATION PAR COUCHES D'UN OBJET TRIDIMENSIONNEL

(30) Priorität: 18.07.2012 DE 102012212587
(43) Veröffentlichungstag der Anmeldung: 29.04.2015
(73) Patentinhaber: EOS GmbH Electro Optical Systems, 82152 Krailling (DE)
(72) Erfinder: PATERNOSTER, Stefan, 82346 Andechs (DE); PHILIPPI, Jochen, 82166 Gräfelfing (DE)
(74) Vertreter: Prüfer & Partner mbB Patentanwälte · Rechtsanwälte
(86) Internationale Anmeldenummer: PCT/EP2013/063545
(87) Internationale Veröffentlichungsnummer: WO 2014/012764

(56) Entgegenhaltungen:
- EP-A1- 1 600 282
- EP-A1- 2 156 942
- EP-A1- 2 340 925
- DE-A1-102007 040 755

## Beschreibung

Die vorliegende Erfindung bezieht sich auf eine Vorrichtung und ein Verfahren zum schichtweisen Herstellen eines dreidimensionalen Objekts, insbesondere auf eine Vorrichtung und ein Verfahren zum Herstellen eines dreidimensionalen Objektes durch schichtweises Verfestigen von Aufbaumaterial an den dem Querschnitt des herzustellenden Objektes in der jeweiligen Schicht entsprechenden Stellen durch Energieeinbringung.

Solch ein Verfahren, das unter dem Namen "Selektives Lasersintern" bekannt ist, sowie eine zugehörige Vorrichtung zur Durchführung des Verfahrens sind aus der DE 10 2005 024 790 A1 bekannt. Gemäß dieser Druckschrift wird zunächst mittels eines Beschichters eine dünne Schicht des pulverförmigen Aufbaumaterials aufgetragen und dieses anschließend an den dem jeweiligen Querschnitt des Objektes entsprechenden Stellen durch Einwirken eines Laserstrahls verfestigt. Diese beiden Schritte werden abwechselnd solange wiederholt, bis das herzustellende dreidimensionale Objekt fertiggestellt ist. Zur Verbesserung der Prozessstabilität und der Qualität der fertigen Objekts wird dabei das Pulver zwischen dem Auftragen und dem Verfestigen durch eine Strahlungsheizung vorgeheizt. Über eine Temperaturmesseinrichtung wird die Temperatur der aufgetragenen Pulverschicht gemessen und die Leistung der Strahlungsheizung entsprechend nachgeregelt.

Die Qualität des hergestellten Objekts hängt von der Art des verwendeten Pulvers ab. So können insbesondere aus Pulver mit erhöhter Schmelzviskosität hergestellte Objekte an ihrer Oberfläche Einfallstellen aufweisen (also Vertiefungen in der Oberfläche des hergestellten Objekts, im Allgemeinen auch als "Orangenhaut" bezeichnet), wodurch die Qualität der Objekte verringert wird.

Zur Lösung dieses Problems wurden spezielle Pulver entwickelt, die jedoch teuer sind und damit die Kosten erhöhen. Außerdem haben die daraus erstellten Bauteile schlechtere mechanische Eigenschaften.

Ferner wurden spezielle Beschichterklingengeometrien vorgeschlagen, mit denen sich das Auftreten von Einfallstellen verringern lässt. Hierzu ist jedoch eine Umrüstung bestehender Maschinen erforderlich.

DE 43 09 524 C2 offenbart ein Verfahren zum Herstellen eines dreidimensionalen Objekts mittels Stereolithographie, bei dem das herzustellende Objekt in einen Kernbereich und einen Hüllbereich unterteilt wird. Der Hüllbereich, in dem es auf hohe Genauigkeit und Qualität der Oberfläche ankommt, wird vollflächig nach jedem Schichtauftrag verfestigt. Im Kernbereich, in dem es auf geringen Verzug und geringe Bauzeiten ankommt, wird nur eine Wabenstruktur verfestigt. In einer speziellen Ausführungsform werden zunächst mehrere Schichten Material aufgebracht und im Hüllbereich verfestigt. Erst nach mehrmals aufeinander folgendem Aufbringen der Schichten und Verfestigen des Hüllbereichs wird das Material des Kernbereichs verfestigt. Das Verfahren ist vor allem für flüssige Aufbaumaterialien offenbart, als Alternative ist jedoch auch pulverförmiges Material angegeben. Das Problem des Auftretens von Einfallstellen wird jedoch in der gesamten Druckschrift nicht erwähnt.

EP 2 156 942 A1 offenbart ebenfalls ein Verfahren und eine Vorrichtung zum schichtweisen Herstellen eines Teils durch Laserschmelzen oder -sintern aus Pulver, wobei zumindest eine Schicht zwei verschiedene Materialien enthält. Dazu wird zunächst eine Schicht eines ersten Materials aufgetragen und selektiv verfestigt. Anschließend wird das erste Material zumindest teilweise entfernt und eine Schicht eines zweiten Materials aufgetragen und selektiv verfestigt.

Die Aufgabe der vorliegenden Erfindung besteht darin, eine Vorrichtung und ein Verfahren zum Herstellen eines dreidimensionalen Objektes durch schichtweises Verfestigen von pulverförmigem Ausgangsmaterial bereitzustellen, durch welche auch bei der Verwendung von herkömmlichem Pulver und herkömmlichen Klingengeometrien Objektoberflächen hoher Qualität erzielt werden können, die insbesondere keine Einfallstellen zeigen.

Die Aufgabe wird gelöst durch ein Verfahren gemäß Anspruch 1 bzw. eine Vorrichtung gemäß Anspruch 11. Weiterbildungen der Erfindung sind in den jeweiligen Unteransprüchen angegeben.

Überraschenderweise wurde festgestellt, dass durch das Aufbringen einer zu verfestigenden Schicht in zwei oder mehr aufeinanderfolgenden Beschichtungsschritten Bauteile mit verbesserter Oberflächenqualität und geringeren Einfallstellen (Orangenhaut) generiert werden konnten.

Weitere Merkmale und Zweckmäßigkeiten der Erfindung ergeben sich aus der Beschreibung von Ausführungsbeispielen anhand der beigefügten Figuren.
- Fig. 1: ist eine schematische teilweise im Schnitt dargestellte Ansicht eines Ausführungsbeispiels einer Vorrichtung zum schichtweisen Herstellen eines dreidimensionalen Objekts, die zum Durchführen der vorliegenden Erfindung geeignet ist.
- Fig. 2: ist eine vergrößerte Schnittansicht eines Ausschnitts, der in Fig. 1 von einer gestrichelten Linie umrahmt ist, und zeigt einen Zustand während der Durchführung des erfindungsgemäßen Verfahrens.
- Fig. 3: ist eine vergrößerte Schnittansicht eines Ausschnitts, der in Fig. 1 von einer gestrichelten Linie umrahmt ist, und zeigt einen Zustand während der Durchführung eines Vergleichsverfahrens, bei dem wie in einem üblichen Verfahren vorgegangen wurde.
- Fig. 4: ist eine vergrößerte Schnittansicht ähnlich Fig. 2 und zeigt einen Zustand während der Durchführung einer Abwandlung des erfindungsgemäßen Verfahrens.
- Fig. 5: ist eine vergrößerte Schnittansicht ähnlich Fig. 2 und zeigt einen Zustand während der Durchführung einer weiteren Abwandlung des erfindungsgemäßen Verfahrens.

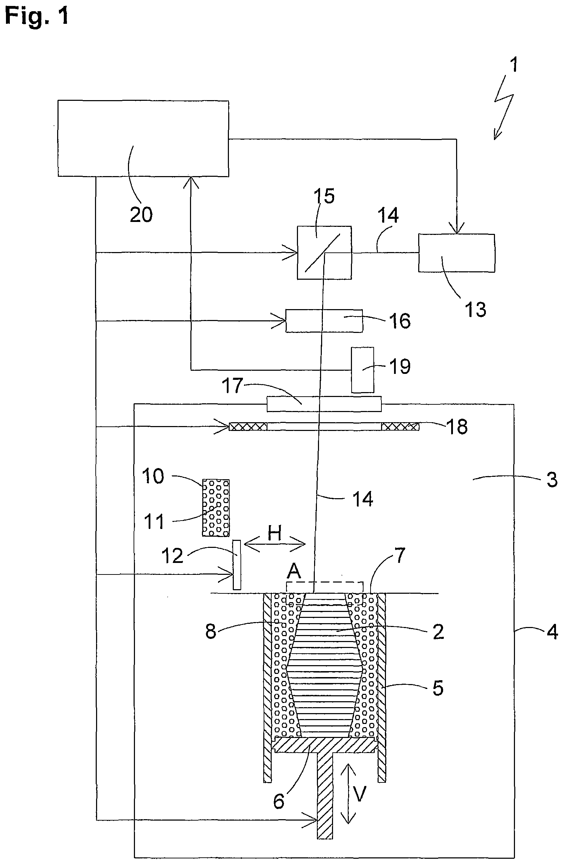

Im Folgenden wird mit Bezug auf Fig. 1 ein Ausführungsbeispiel einer Vorrichtung beschrieben, die zur Durchführung des erfindungsgemäßen Verfahrens geeignet ist. Die in Fig. 1 dargestellte Vorrichtung stellt eine Lasersintervorrichtung 1 dar. Zum Aufbauen des Objekts 2 enthält sie eine Prozesskammer 3, die durch eine Kammerwand 4 nach außen abgeschlossen ist und als Bauraum für das Objekt dient.

In der Prozesskammer 3 ist ein nach oben offener Behälter 5 angebracht, in dem ein Träger 6 mit einer im wesentlichen ebenen und zu der Oberkante des Baubehälters im wesentlichen parallel ausgerichteten Oberseite angeordnet ist. Der Träger 6 dient zur Unterstützung des zu bildenden Objekts 2 und ist, in Fig. 1 durch einen vertikalen Doppelpfeil V angedeutet, über eine (nicht dargestellte) Höhenverstelleinrichtung in vertikaler Richtung bewegbar. Dabei wird der Träger 6 in vertikaler Richtung jeweils so eingestellt, dass die Oberseite einer neu zu verfestigenden Schicht in einer Arbeitsebene 7 liegt. In Fig. 1 ist das zu bildende Objekt 2 in einem Zwischenzustand dargestellt, in dem bereits eine Mehrzahl von Schichten pulverförmigen Aufbaumaterials selektiv verfestigt wurde und von unverfestigt gebliebenem Aufbaumaterial 8 umgeben ist.

Weiterhin enthält die Lasersintervorrichtung 1 einen Vorratsbehälter 10 zur Aufnahme eines durch elektromagnetische Strahlung verfestigbaren pulverförmigen Aufbaumaterials 11 und einen Beschichter 12 zum Aufbringen des Aufbaumaterials 11 auf die Arbeitsebene 7. Der Beschichter 12 ist, wie in Fig. 1 durch einen horizontalen Doppelpfeil H angedeutet, in horizontaler Richtung parallel zu der Arbeitsebene beweglich.

Die Lasersintervorrichtung 1 weist ferner einen Laser 13 auf, der einen Laserstrahl 14 erzeugt. Der Laserstrahl 14 wird über eine Umlenkvorrichtung 15 umgelenkt und durch eine Fokussiervorrichtung 16 über ein Einkoppelfenster 17 in der Wand der Prozesskammer 3 auf einen vorbestimmten Punkt in bzw. unmittelbar unterhalb der Arbeitsebene 7 fokussiert.

Zum Vorheizen des Pulvers ist eine Strahlungsheizung 18 vorgesehen. Ferner ist eine Temperaturmesseinrichtung 19 vorgesehen, die vorzugsweise durch ein Punktpyrometer verwirklicht ist.

Schließlich ist eine Steuereinheit 20 vorgesehen, über die die Bestandteile der Vorrichtung in koordinierter Weise zum Durchführen des Bauprozesses gesteuert werden. Die Steuereinheit 20 steuert u.a. die Vertikalbewegung des Trägers 6, die Horizontalbewegung des Beschichters 12 und die Umlenkvorrichtung 15. Gegebenenfalls werden auch die Fokussiervorrichtung 16, die Intensität des Lasers 13 und die Leistung der Strahlungsheizung 18 gesteuert. Für eine Temperatursteuerung erhält die Steuereinheit 20 die Messergebnisse von der Temperaturmesseinrichtung 19. Die Steuereinheit kann eine CPU enthalten, deren Betrieb durch ein Computerprogramm gesteuert wird.

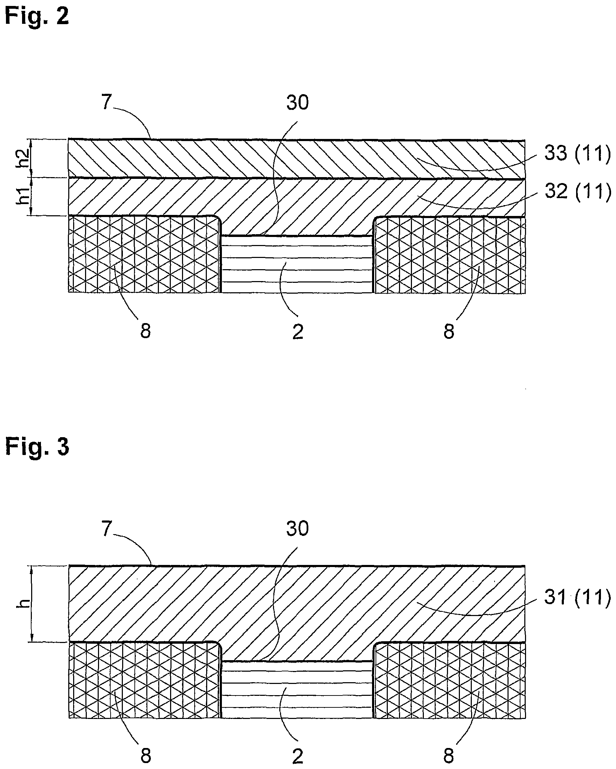

Mit Bezug auf Fig. 2 wird nun ein erfindungsgemäßer Betrieb der Lasersintervorrichtung 1 zum Herstellen eines dreidimensionalen Objekts beschrieben.

Fig. 2 zeigt vergrößert einen Ausschnitt A, der in Fig. 1 von einer gestrichelten Linie umrahmt ist. Das erst teilweise fertig gestellte Objekt 2 ist von unverfestigt gebliebenem Pulver 8 umgeben. Da das Pulver beim Verfestigen an Volumen verliert, liegt die Oberfläche des Objekts 2 unterhalb der des unverfestigt gebliebenen Pulvers 8, so dass an dieser Stelle eine Einsenkung 30 ausgebildet ist.

Zum Aufbringen einer Pulverschicht der Dicke h wird der Träger 6 zunächst um eine erste Höhe h1 abgesenkt, die kleiner ist als die gewünschte Schichtdicke h. Unter Verwendung des Beschichters 12 wird nun eine erste Schicht 32 des pulverförmigen Aufbaumaterials 11 aufgetragen. Die Aufbringung erfolgt zumindest über den gesamten Querschnitt des herzustellenden Objekts, vorzugsweise über das gesamte Baufeld. Die Dicke dieser ersten Pulverteilschicht 32 beträgt somit ebenfalls h1, ausgenommen dort, wo sie zusätzlich die Einsenkung 30 füllt. Damit ergibt sich eine ebene Oberfläche der ersten Pulverteilschicht 32.

Ohne eine Belichtung der ersten Pulverteilschicht 32 oder eines Teilbereichs dieser Schicht mit dem Laser 13 durchzuführen, wird nun der Träger 6 um eine zweite Höhe h2 abgesenkt, die kleiner ist als die gewünschte Dicke h und mit der ersten Höhe h1 zusammen die gewünschte Höhe h ergibt (h=h1+h2). Vorzugsweise sind h1 und h2 gleich groß und betragen die Hälfte von h (h1=h2=h/2), dies ist jedoch nicht zwingend. Unter Verwendung des Beschichters 12 wird nun eine zweite Schicht 33 des pulverförmigen Aufbaumaterials 11 aufgetragen. Auch die Aufbringung der zweiten Pulverteilschicht 33 erfolgt zumindest über den gesamten Querschnitt des herzustellenden Objekts, vorzugsweise über das gesamte Baufeld. Die Dicke dieser zweiten Pulverteilschicht 33 beträgt somit ebenfalls h2, so dass die Gesamtdicke des neu aufgebrachten Pulvers 11, also die gemeinsame Dicke der Schichten 32 und 33, h beträgt. Damit ergibt sich eine ebene Oberfläche der zweiten Pulverteilschicht 33 in der Arbeitsebene 7.

Vor der Belichtung mit dem Laser 13 muss das neu aufgebrachte Pulver 11 in den beiden Pulverteilschichten 32 und 33 erst auf die erforderliche Prozesstemperatur gebracht werden. Die Erwärmung des Pulvers erfolgt dabei von oben durch die Strahlungsheizung 18, und zwar sowohl zwischen dem Aufbringen der beiden Schichten als auch nach dem Aufbringen der zweiten Schicht. Die Pulvertemperatur wird dabei durch die Temperaturmesseinrichtung 19 erfasst und an die Steuereinheit 20 weitergegeben, welche die Strahlungsheizung so ansteuert, dass eine Temperaturregelung der Pulvertemperatur erfolgt. Vorzugsweise ist das Messfeld der Temperaturmesseinrichtung 19 auf einen Bereich der Pulverschicht gerichtet, in dem keine Verfestigung des Pulvers durch den Laserstrahl 14 erfolgt. Um die erforderliche Prozesstemperatur schneller zu erreichen, kann in der Zeit zwischen den beiden Beschichtungsvorgängen auf die Temperaturregelung verzichtet werden und stattdessen in dieser Zeit die Strahlungsheizung 18 mit einer konstanten Leistung betrieben werden.

Mit Bezug auf Fig. 3 wird nun ein zum Vergleich durchgeführtes Verfahren beschrieben, bei dem auf die Unterteilung der aufzubringenden Schicht in zwei oder mehr Schichten verzichtet wurde. Parameter und Vorgehensweisen, die identisch zu dem erfindungsgemäßen Verfahren sind, werden dabei nicht nochmals beschrieben.

Fig. 3 zeigt wie Fig. 2 vergrößert den Ausschnitt A, der in Fig. 1 von einer gestrichelten Linie umrahmt ist. Das obere Ende des erst teilweise fertig gestellten Objekts 2, das dieses umgebende unverfestigt gebliebene Pulver 8 sowie die Einsenkung 30 sind genauso wie in Fig. 2 dargestellt und werden daher nicht noch einmal beschrieben.

Gemäß dem Vergleichsverfahren wird zum Aufbringen einer Pulverschicht der Dicke h der Träger 6 um eine Höhe h abgesenkt. Unter Verwendung des Beschichters 12 wird nun eine neue Pulverschicht 31 aufgetragen, deren Dicke der Absenkung des Trägers, also ebenfalls h, entspricht. Damit liegt die Oberseite der neuen Pulverschicht 31 in der Arbeitsebene 7.

Bevor die Belichtung mit dem Laser 13 erfolgen kann, wird wiederum erst die Oberfläche der neu aufgebrachten Pulverschicht 31 mit der Strahlungsheizung auf die erforderliche Prozesstemperatur gebracht.

Das erfindungsgemäße Verfahren führt gegenüber dem Vergleichsverfahren bei dem gleichen Pulvermaterial und den gleichen generierten Objekten zu einem deutlich gleichmäßigerer Schichtverlauf und einer deutlichen Verringerung der Einfallstellen und damit zu einer deutlich erhöhten Oberflächenqualität. Somit kann auch bei der Verwendung von Pulver mit erhöhter Schmelzviskosität eine zufrieden stellende Oberflächengüte erzielt werden. Die für das Beheizen der beiden Schichten erforderliche Zeit, die die Prozessdauer maßgeblich bestimmt, liegt dabei in Summe in der Größenordnung der zum Beheizen der Gesamtschicht in dem Vergleichsverfahren erforderlichen Zeit, so dass sich die Herstellungsdauer des Objekts nicht oder nur unwesentlich erhöht.

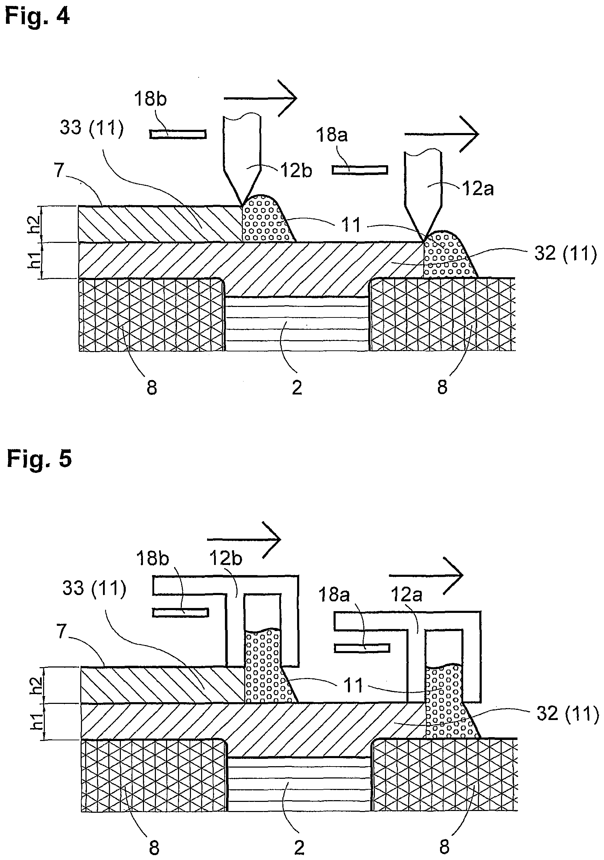

Das Aufbringen der zwei Pulverteilschichten kann wie oben beschrieben durch zweimaliges Absenken des Trägers und zweimaliges Fahren des Beschichters über den zu beschichtenden Bereich verwirklicht werden. In einer Abwandlung des erfindungsgemäßen Verfahrens kann sie aber auch durch einmaliges Absenken des Trägers und einmaliges Fahren des Beschichters erzielt werden, wie es schematisch in den Figuren 4 und 5 dargestellt ist.

Wie in Fig. 4 gezeigt, wird dafür ein Beschichter eingesetzt, der zwei in Fahrtrichtung hintereinander angeordnete Teilschicht-Beschichter (12a, 12b) aufweist. Der Träger wird um die Gesamthöhe h (h1+h2) der aufzubringenden Schicht abgesenkt. Der in Fahrtrichtung vordere Teilschicht-Beschichter (12a) ist auf eine Höhe über der zuvor aufgebrachten Schicht eingestellt, die der Dicke (h1) der ersten Pulverteilschicht (32) entspricht, und der zweite Teilschicht-Beschichter (12b) ist auf eine Höhe eingestellt, die der Summe der Dicken (h1+h2) der beiden Pulverteilschichten (32, 33) entspricht. Der Höhenunterschied zwischen beiden Teilschicht-Beschichtern entspricht somit der Dicke (h2) der zweiten Pulverteilschicht (33). Vor den Teilschicht-Beschichtern aufgebrachtes Pulver (11) wird von den Teilschicht-Beschichtern jeweils zu einer gleichmäßigen Schicht (32, 33) ausgezogen. Dabei wird die zweite Pulverteilschicht (33) an Stellen gebildet, an denen kurz vorher die erste Pulverteilschicht (32) gebildet wurde. Damit auch hier ein Heizen zwischen dem Aufbringen der beiden Schichten erfolgen kann, ist in Fahrtrichtung hinter jedem Teilschicht-Beschichter (12a, 12b) ein Heizelement (18a, 18b) angeordnet, das mit dem Teilschicht-Beschichter verfahren wird und beispielsweise aus einer Strahlenheizung gebildet ist.

Eine weitere Abwandlung ist in Fig. 5 gezeigt. Hier sind die Beschichter mit zwei Klingen versehen, die zwischen sich ein Reservoir für das aufzutragende Pulver bilden. Das Pulver wird jeweils durch die in Fahrtrichtung hintere Klinge zu einer gleichmäßigen Schicht (32, 33) ausgezogen. Auch bei dieser Abwandlung ist in Fahrtrichtung hinter jedem Teilschicht-Beschichter (12a, 12b) ein Heizelement (18a, 18b) angeordnet.

Mit beiden Abwandlungen ist auch eine Beschichtung bei unterschiedlicher Fahrtrichtung des Beschichters möglich. Dabei müssen zunächst die Höhenpositionen der beiden Teilschicht-Beschichter getauscht werden, da der ehemals vordere Teilschicht-Beschichter jetzt der hintere ist und umgekehrt. Außerdem muss dafür Sorge getragen werden, dass das Heizelement jeweils in Fahrtrichtung hinter dem Teilschicht-Beschichter angeordnet ist. Das kann durch Verschwenken eines einzelnen Heizelements oder durch Anordnen von Heizelementen auf beiden Seiten des jeweiligen Teilschicht-Beschichters erreicht werden.

Je nach den Eigenschaften des Pulvers, den verwendeten Prozessparametern wie Schichtdicke und Pulvertemperatur usw. und den Qualitätsanforderungen an das fertiggestellte Objekt kann es auch vorteilhaft sein, die aufzubringende und zu belichtende Pulverschicht in mehr als zwei Pulverteilschichten zu unterteilen, die nacheinander übereinander aufgebracht werden, bevor eine Belichtung stattfindet. Die gewünschte Höhe h ist dann die Summe der Höhen der einzelnen Pulverteilschichten (h=h1+h2+...+hn). Die Höhen h1 bis hn können dabei zueinander gleich oder voneinander verschieden sein. Beheizt wird nach dem Aufbringen jeder dieser einzelnen Pulverteilschichten. Die Temperaturregelung kann dann in analoger Weise zwischen dem Aufbringen der ersten Pulverteilschicht und dem Aufbringen der letzten Pulverteilschicht ausgesetzt werden und die Strahlungsheizung mit ihrer maximalen Leistung betrieben werden. Bei der Abwandlung der Schichtaufbringung enthält der Beschichter in diesem Fall drei oder mehr Teilschicht-Beschichter und Heizelemente.

Die Unterteilung der Schicht zur Verbesserung der Oberflächenqualität (gleichmäßigerer Schichtverlauf, Vermeidung von Einfallstellen) in eine oder mehrere entsprechend dünnere Pulverteilschichten, die erst nach dem Auftrag der letzten Pulverteilschicht verfestigt werden, ist vor allem für einen Randbereich entlang der Außenkontur des herzustellenden Objekts von Bedeutung. So kann durchaus in einem Kernbereich nach dem Aufbringen jeder Schicht eine Verfestigung des Materials durchgeführt werden, während das in dem Randbereich bzw. an der Außenkontur erst nach dem Aufbringen der letzten Schicht erfolgt.

Auch wenn die vorliegende Erfindung anhand einer Lasersintervorrichtung beschrieben wurde, ist sie nicht auf das Lasersintern eingeschränkt. Sie kann auf beliebige Verfahren zum Herstellen eines dreidimensionalen Objektes durch schichtweises Aufbringen und selektives Verfestigen eines pulverförmigen Aufbaumaterials durch Einwirkung von Energie angewendet werden. So kann z.B. anstelle eines Lasers eine Leuchtdiode (LED), ein LED-Array, ein Elektronenstrahl oder jede andere Energie- bzw. Strahlenquelle, die geeignet ist, das pulverförmige Aufbaumaterial zu verfestigen, verwendet werden. Auch auf das selektive Maskensintern, bei dem anstelle eines Laserstrahls eine Maske und eine ausgedehnte Lichtquelle verwendet werden, oder auf das Absorbtions- bzw. Inhibitionssintern kann die Erfindung angewendet werden. Insbesondere bezieht sich die Erfindung allgemein auf das Herstellen eines gesamten Objekts allein mittels schichtweisen Auftragens und selektiven Verfestigens eines pulverförmigen Aufbaumaterials.

Als Aufbaumaterial können alle Arten von Kunststoffpulver verwendet werden. Beispiele für geeignete Kunststoffpulver sind Polyamide, z.B. PA11 oder PA12, und Polyetherketone bzw. Polyaryletherketone wie z.B. PEEK. Besonders vorteilhaft lässt sich das erfindungsgemäße Verfahren für ungeregelte Polyamide einsetzen, die einer besonders starken Alterung beim Lasersintern unterliegen.

## Patentansprüche

1. Verfahren zum Herstellen eines dreidimensionalen Objektes durch schichtweises Aufbringen und selektives Verfestigen eines pulverförmigen Aufbaumaterials durch Einwirkung von Energie, mit den Schritten:
Aufbringen einer Schicht (32, 33) des pulverförmigen Aufbaumaterials (11) mit einer vorbestimmten Höhe (h) auf einen Träger (6) oder eine zuvor zumindest selektiv verfestigte Schicht des Aufbaumaterials und
Einbringen von Energie (14) aus einer Energiequelle (13) in die aufgetragene Schicht an den einem Querschnitt des herzustellenden Objektes entsprechenden Stellen zum selektiven Verfestigen des pulverförmigen Aufbaumaterials, wobei
der Schritt des Aufbringens der Schicht mit der vorbestimmten Höhe (h) unterteilt ist in einen Schritt des Aufbringens einer ersten Pulverteilschicht (32) mit einer ersten Höhe (h1), die kleiner als die vorbestimmte Höhe (h) ist, und einen Schritt des Aufbringens zumindest einer zweiten Pulverteilschicht (33) mit einer zweiten Höhe (h2), die kleiner als die vorbestimmte Höhe (h) ist, auf der ersten Pulverteilschicht (32),
wobei die Gesamthöhe (h1+h2+...) der aufgebrachten Pulverteilschichten (32, 33, ...) der vorbestimmten Höhe (h) entspricht und
zwischen dem Schritt des Aufbringens der ersten Pulverteilschicht und dem Schritt des Aufbringens der zweiten und eventueller weiterer Pulverteilschichten die jeweils zuletzt aufgebrachte Pulverteilschicht beheizt wird,
**dadurch gekennzeichnet, dass**
zwischen dem Schritt des Aufbringens der ersten Pulverteilschicht (32) und dem Schritt des Aufbringens der zweiten (33) und eventueller weiterer Pulverteilschichten zumindest in einem Randbereich des herzustellenden Objekts kein Einbringen von Energie zum selektiven Verfestigen des pulverförmigen Aufbaumaterials erfolgt.

2. Verfahren gemäß Anspruch 1, bei dem zwischen dem Schritt des Aufbringens der ersten Pulverteilschicht (32) und dem Schritt des Aufbringens der zweiten (33) und eventueller weiterer Pulverteilschichten über den gesamten Querschnitt des herzustellenden Objekts kein Einbringen von Energie zum selektiven Verfestigen des pulverförmigen Aufbaumaterials erfolgt.

3. Verfahren gemäß einem der Ansprüche 1 bis 2, bei dem
die Temperatur der aufgebrachten Schicht (32, 33) des pulverförmigen Aufbaumaterials (11) gemessen wird und
die Beheizung der aufgebrachten Schicht (32, 33) in Abhängigkeit von der gemessenen Temperatur der aufgebrachten Schicht geregelt wird.

4. Verfahren gemäß Anspruch 3, bei dem zwischen den Aufbringvorgängen der Pulverteilschichten (32, 33) die Regelung der Temperatur ausgesetzt wird und mit konstanter Leistung geheizt wird.

5. Verfahren gemäß einem der Ansprüche 1 bis 4, bei dem die Energie als elektromagnetische Strahlung eingebracht wird, vorzugsweise als Strahlung eines Lasers.

6. Verfahren gemäß einem der Ansprüche 1 bis 5, bei dem das Aufbaumaterial ein Kunststoffpulver (11) ist, vorzugsweise ein Polyamid, z.B. PA11 oder PA12, oder ein Polyaryletherketon, z.B. PEEK, besonders bevorzugt ungeregelte Polyamide.

7. Verfahren gemäß einem der Ansprüche 1 bis 6, bei dem das Aufbringen der Schicht mit der vorbestimmten Höhe (h) unterteilt ist in das Aufbringen von zwei Pulverteilschichten (32, 33), die jeweils die halbe vorbestimmte Höhe (h/2) aufweisen.

8. Verfahren gemäß einem der Ansprüche 1 bis 6, bei dem das Aufbringen der Schicht mit der vorbestimmten Höhe (h) unterteilt ist in das Aufbringen von drei oder mehr Pulverteilschichten.

9. Verfahren gemäß einem der Ansprüche 1 bis 8, bei dem das Aufbringen der zwei oder mehr Pulverteilschichten (32, 33) während der horizontalen Bewegung von zwei oder mehr hintereinander fahrenden Teilschicht-Beschichtern (12a, 12b) erfolgt.

10. Verfahren gemäß Anspruch 9, bei dem
das Aufbringen der zwei oder mehr Pulverteilschichten (32, 33) sowohl während der horizontalen Bewegung der zwei oder mehr hintereinander fahrenden Teilschicht-Beschichter (12a, 12b) in die eine Richtung als auch während der horizontalen Bewegung der Teilschicht-Beschichter in die entgegengesetzte Richtung erfolgt,
wobei die Höhenpositionen der einzelnen Teilschicht-Beschichter beim Wechsel der Fahrtrichtung getauscht werden.

11. Vorrichtung zum Herstellen eines dreidimensionalen Objektes durch schichtweises Aufbringen und selektives Verfestigen eines pulverförmigen Aufbaumaterials durch Einwirkung von Energie, mit
einem Träger (6), auf dem das Objekt (2) aufgebaut wird,
einem Beschichter (12) zum Auftragen einer Schicht des Aufbaumaterials (11) auf den Träger oder eine zuvor zumindest selektiv verfestigte Schicht,
einer Energiequelle (13) zum Einbringen von Energie (14) in eine zuvor aufgetragene Schicht des Aufbaumaterials, und
einer Steuereinheit (20) zum Steuern des Auftragens einer Schicht und der Einbringung von Energie,
wobei die Steuereinheit vorzugsweise eine CPU enthält, deren Betrieb durch ein Computerprogramm steuerbar ist,
**dadurch gekennzeichnet, dass** die Steuereinheit daran angepasst ist, die Vorrichtung zum Durchführen eines Verfahrens nach einem der Ansprüche 1 bis 10 zu steuern.

12. Vorrichtung gemäß Anspruch 11, weiter mit
einer Strahlungsheizung (18) zum Heizen der aufgebrachten Schicht (32, 33) des pulverförmigen Aufbaumaterials (11).

13. Vorrichtung gemäß Anspruch 12, weiter mit einer Temperaturmessvorrichtung (19) zum Messen der Temperatur der aufgebrachten Schicht (32, 33) des pulverförmigen Aufbaumaterials (11), wobei die Temperaturmessvorrichtung (19) vorzugsweise ein Punktpyrometer ist.

14. Vorrichtung gemäß einem der Ansprüche 11 bis 13, bei dem die Energiequelle (13) eine Quelle elektromagnetischer Strahlung, vorzugsweise ein Laser ist.

15. Vorrichtung gemäß einem der Ansprüche 11 bis 14, bei der der Beschichter (12) zwei oder mehr in Fahrtrichtung hintereinander angeordnete Teilschicht-Beschichter (12a, 12b) enthält.

## Claims

1. Method for manufacturing a three-dimensional object layer by layer by applying and selectively solidifying a constituent material in powder form layer by layer by supply of energy, comprising the steps:
applying a layer (32, 33) of the powdery constituent material (11) having a pre-determined height (h) onto a support (6) or a previously at least selectively solidified layer of the constituent material and
supplying energy (14) from an energy source (13) into the applied layer at positions corresponding to a cross sectional area of the object to be manufactured for selectively solidifying the constituent material in powder form, wherein
the step of applying the layer having the pre-determined height (h) is subdivided into a step of applying a first partial powder layer (32) having a first height (h1) which is smaller than the pre-determined height (h), and a step of applying at least a second partial powder layer (33) having a second height (h2) which is smaller than the pre-determined height (h) onto the first partial powder layer (32),
wherein the total height (h1+h2+ ...) of the applied partial powder layers (32, 33, ...) corresponds to the pre-determined height (h), and
between the step of applying the first partial powder layer and the step of applying the second and possibly further partial powder layers, the powder layer applied last is heated,
**characterized in that**
between the step of applying the first partial powder layer (32) and the step of applying the second (33) and possibly further partial powder layers, at least in a peripheral region of the object to be manufactured, no supply of energy for selectively solidifying the constituent material is effected.

2. Method according to claim 1, wherein
between the step of applying the first partial powder layer (32) and the step of applying the second (33) and possibly further partial powder layers, no supply of energy for selectively solidifying the constituent material is effected in the entire cross section of the object to be manufactured.

3. Method according to claim 1 or 2, wherein
the temperature of the applied layer (32, 33) of the powdery constituent material (11) is measured and
heating the applied layer (32, 33) is feedback-controlled depending on the measured temperature of the applied layer.

4. Method according to claim 3, wherein the feedback-control of the temperature is interrupted between the application processes of the partial powder layers (32, 33), and heating is performed with a constant power.

5. Method according to one of claims 1 to 4, wherein the energy is supplied in form of an electromagnetic radiation, preferably as a radiation of a laser.

6. Method according to one of claims 1 to 5, wherein the constituent material is a plastic powder (11), preferably a polyamide such as PA11 or PA12, or a polyaryletherketone such as PEEK, in an especially preferred way unregulated polyamides.

7. Method according to one of claims 1 to 6, wherein applying the layer having the pre-determined height (h) is subdivided into applying two partial powder layers each providing half of the pre-determined height (h/2).

8. Method according to one of claims 1 to 6, wherein applying the layer having the pre-determined height (h) is subdivided into applying three or more partial powder layers.

9. Method according to one of claims 1 to 8, wherein applying the two or more partial powder layers (32, 33) is effected during a horizontal movement of two or more partial layer applicators (12a, 12b) travelling one behind the other.

10. Method according to claim 9, wherein
applying the two or more partial powder layers (32, 33) is effected during the horizontal movement of the two or more partial layer applicators (12a, 12b) travelling one behind the other into one direction as well as during the horizontal movement of partial layer applicators into the opposite direction,
wherein the height positions of the individual partial layer applicators being exchanged at a change of the direction of movement.

11. Apparatus for manufacturing a three-dimensional object layer by layer by applying and selectively solidifying a constituent material in powder form layer by layer by supply of energy, comprising:
a support (6) on which the object (2) is built,
an applicator (12) for applying a layer of the constituent material (11) onto the support or a previously at least selectively solidified layer,
an energy source (13) for supplying energy (14) into a previously applied layer of the constituent material, and
a control unit (20) for controlling the application of a layer and the supply of energy,
wherein the control unit preferably comprises a CPU the operation of which is controllable by a computer program,
**characterized in that**
the control unit is adapted to control the apparatus to perform a method according to one of claims 1 to 10.

12. Apparatus according to claim 11, further comprising a radiation heating (18) for heating the applied layer (32, 33) of the powdery constituent material (11).

13. Apparatus according to claim 12, further comprising a temperature measuring unit (19) for measuring the temperature of the applied layer (32, 33) of the powdery constituent material,
wherein the temperature measuring unit (19) preferably is a point pyrometer.

14. Apparatus according to one of claims 11 to 13, wherein the energy source (13) is a source of electromagnetic radiation, preferably a laser.

15. Apparatus according to one of claims 11 to 14, wherein the applicator (12) comprises two or more partial layer applicators (12a, 12b) which are arranged one behind the other in the direction of movement.

## Revendications

1. Procédé servant à fabriquer un objet tridimensionnel par application par couches et par consolidation sélective d'un matériau de construction pulvérulent par l'effet d'une énergie, avec les étapes :
d'application d'une couche (32, 33) du matériau de construction (11) pulvérulent avec une hauteur (h) prédéfinie sur un support (6) ou une couche consolidée au préalable au moins de manière sélective du matériau de construction et
d'introduction d'une énergie (14) provenant d'une source d'énergie (13) dans la couche appliquée aux emplacements correspondant à une section transversale de l'objet à fabriquer pour consolider de manière sélective le matériau de construction pulvérulent, dans lequel
l'étape d'application de la couche avec la hauteur (h) prédéfinie est divisée en une étape d'application d'une première couche partielle de poudre (32) avec une première hauteur (h1), qui est inférieure à la hauteur (h) prédéfinie, et une étape d'application d'au moins une deuxième couche partielle de poudre (33) avec une deuxième hauteur (h2), qui est inférieure à la hauteur (h) prédéfinie, sur la première couche partielle de poudre (32),
dans lequel la hauteur totale (h1+h2+...) des couches partielles de poudre (32, 33, ...) appliquées correspond à la hauteur (h) prédéfinie, et
la couche partielle de poudre appliquée respectivement en dernier lieu est chauffée entre l'étape d'application de la première couche partielle de poudre et l'étape d'application de la deuxième et d'autres couches partielles de poudre éventuelles,
**caractérisé en ce que**
aucune introduction d'énergie servant à consolider de manière sélective le matériau de construction pulvérulent n'a lieu au moins dans une zone de bord de l'objet à fabriquer entre l'étape d'application de la première couche partielle de poudre (32) et l'étape d'application de la deuxième (33) et des autres couches partielles de poudre éventuelles.

2. Procédé selon la revendication 1, dans lequel aucune introduction d'énergie servant à consolider de manière sélective le matériau de construction pulvérulent n'a lieu sur l'ensemble de la section transversale de l'objet à fabriquer entre l'étape d'application de la première couche partielle de poudre (32) et l'étape d'application de la deuxième (33) et d'autres couches partielles de poudre éventuelles.

3. Procédé selon l'une quelconque des revendications 1 à 2, dans lequel
la température de la couche (32, 33) appliquée du matériau de construction (11) pulvérulent est mesurée, et
le chauffage de la couche (32, 33) appliquée est régulé en fonction de la température mesurée de la couche appliquée.

4. Procédé selon la revendication 3, dans lequel la régulation est soumise à la température et le chauffage est réalisé avec une puissance constante entre les opérations d'application des couches partielles de poudre (32, 33).

5. Procédé selon l'une quelconque des revendications 1 - à 4, dans lequel l'énergie est introduite en tant que rayonnement électromagnétique, de préférence en tant que rayonnement d'un laser.

6. Procédé selon l'une quelconque des revendications 1 à 5, dans lequel le matériau de construction est une poudre de matière synthétique (11), de préférence un polyamide, par exemple du PA11 ou du PA12, ou une polyaryléthercétone, par exemple le PEEK, de manière particulièrement préférée des polyamides non régulés.

7. Procédé selon l'une quelconque des revendications 1 à 6, dans lequel l'application de la couche avec la hauteur (h) prédéfinie est divisée en l'application de deux couches partielles de poudre (32, 33), qui présentent respectivement la moitié de la hauteur (h/2) prédéfinie.

8. Procédé selon l'une quelconque des revendications 1 à 6, dans lequel l'application de la couche avec la hauteur (h) prédéfinie est divisée en l'application de trois couches partielles de poudre ou plus.

9. Procédé selon l'une quelconque des revendications 1 à 8, dans lequel l'application des deux couches partielles de poudre (32, 33) ou plus a lieu pendant le déplacement horizontal de deux systèmes de revêtement de couche partielle (12a, 12b) ou plus se déplaçant les uns derrière les autres.

10. Procédé selon la revendication 9, dans lequel
l'application des deux couches partielles de poudre (32, 33) ou plus a lieu à la fois dans une direction pendant le déplacement horizontal des deux systèmes de revêtement de couche partielle (12a, 12b) ou plus se déplaçant les uns derrière les autres et dans la direction opposée pendant le déplacement horizontal des systèmes de revêtement de couche partielle,
dans lequel les positions en hauteur des divers systèmes de revêtement de couche partielle sont échangées lors du changement de la direction de déplacement.

11. Dispositif servant à fabriquer un objet tridimensionnel par application par couches et par consolidation sélective d'un matériau de construction pulvérulent par l'effet d'une énergie, avec
un support (6), sur lequel l'objet (2) est élaboré,
un système de revêtement (12) servant à appliquer une couche du matériau de construction (11) sur le support ou une couche consolidée au moins de manière sélective au préalable,
une source d'énergie (13) servant à introduire de l'énergie (14) dans une couche appliquée au préalable du matériau de construction, et
une unité de commande (20) servant à commander l'application d'une couche et l'introduction d'énergie,
dans lequel l'unité de commande contient de préférence un CPU dont le fonctionnement peut être commandé par un programme informatique,
**caractérisé en ce que** l'unité de commande est adaptée pour commander le dispositif servant à mettre en œuvre un procédé selon l'une quelconque des revendications 1 à 10.

12. Dispositif selon la revendication 11, par ailleurs avec
un chauffage rayonnant (18) servant à chauffer la couche (32, 33) appliquée du matériau de construction (11) pulvérulent.

13. Dispositif selon la revendication 12, avec par ailleurs un dispositif de mesure de température (19) servant à mesurer la température de la couche (32, 33) appliquée du matériau de construction (11) pulvérulent, dans lequel le dispositif de mesure de température (19) est de préférence un pyromètre ponctuel.

14. Dispositif selon l'une quelconque des revendications 11 à 13, dans lequel la source d'énergie (13) est une source d'un rayonnement électromagnétique, de préférence un laser.

15. Dispositif selon l'une quelconque des revendications 11 à 14, dans lequel le système de revêtement (12) contient deux systèmes de revêtement de couche partielle (12a, 12b) ou plus disposés l'un derrière l'autre dans la direction de déplacement.
